Europäisches Patentamt

European Patent Office

Office européen des brevets

(11) Publication number: **0 505 956 A1**

# EUROPEAN PATENT APPLICATION

(21) Application number: **92104959.9**

(22) Date of filing: **23.03.92**

(51) Int. Cl.5: **A47L 1/02**

(30) Priority: **29.03.91 IT PN910019**

(43) Date of publication of application:
**30.09.92 Bulletin 92/40**

(84) Designated Contracting States:
**AT BE CH DE ES FR GB LI NL**

(71) Applicant: **HEBOR ANSTALT**
**Am Schragen Weg 14**
**FL-9490 Vaduz(LI)**
Applicant: **CLIMA S.r.L.**
**Via Amman, 32**
**I-33084 Cordenons (Pordenone)(IT)**

(72) Inventor: **Pion, Liliane**
**Hebor Anstalt, Am Schragen Weg, 14**
**FL-9490 Vaduz(LI)**

(74) Representative: **Da Riva, Ermanno**
**AGENZIA BREVETTI "PORDENONE" Via S.**
**Ouirino, 9**
**I-33170 Pordenone(IT)**

(54) **Apparatus for cleaning continuous smooth surfaces.**

(57) Apparatus for cleaning continuous smooth surfaces comprising a cleaning unit (A) and a seizing unit (B).

The cleaning unit (A) comprises suitable rotating brushes (10-30), liquid detergents sprayers (20), sucking manifolds (12-40) and/or blowing manifolds (50), which are operated and co-operating in a per se known manner.

The seizing unit (B) comprises a pair of tracks (60) strained between respective pulleys (80-81), which are arranged parallel to each other and operated synchronously by a suitable motor (805), which tracks are provided with a plurality of cups (70) fixed thereto by means of adequate rigid bodies (71), in which discoidal membranes (73) providing for the effective cups are controlled centrally by an associated stem (74), which operates under depression said discoidal membranes (73) at the adherence portion thereof.

A further set of tracks (60b) disposed orthogonally to the previous one permits to obtain translations orthogonal to each other.

Fig.1

The present invention relates to a new apparatus for cleaning particularly smooth surfaces formed by glass slabs or the like.

As known, in the building industry constructions it is more and more diffused to made the façades or parts of façades formed by surfaces of glass or of other material having always a fully smooth surface.

Obviously, such surfaces must be cleaned at more or less long times from the dust and other substances which progressively collect thereon.

In order to effect such cleaning, there are used different systems, which may vary from that basically manual, in case assisted by adequate apparatuses, to more or less mechanized and automatized systems.

Usually, in order to effect cleaning of large surfaces extended vertically for considerable heights as in the case of skyscrapers, there are employed movable platforms fitted by ropes to the upper part of the building, which thus can slide vertically along the façade and are progressively moved therealong, on which platforms one or more persons then provide for cleaning operations.

For limited heights are employed other apparatuses, i.e. platforms disposed at the ends of sets of foldable arms or, in more limited cases, there are employed even conventional rung-ladders, telescopic ladders etc.

Recently, a rather simple apparatus has been proposed, basically consisting of set of sprayers for a suitable cleaning liquid and of rotating brushes driven by a pneumatic motor, the assembly being disposed in an appropriate container which is laid on the surface to be cleaned and hung by means of a rope to a winch situated on the upper edge of the associated façade, which winch when is adequately operated shifts longitudinally in a vertical direction the same apparatus.

Moreover, the winch may be moved along the upper edge of the façade, so as to allow the apparatus to clean it entirely.

Normally, a suitable compressed air generator feeding the pneumatic motor through a flexible pipe is arranged together with said winch.

Clearly, the above described entire unit still providing for a considerable simplification and rationalization of the problem of cleaning façades of the kind referred to, is rather complicated, requires the arrangement of the unit winch-compressor on the upper end of the wall to be cleaned, which in some cases may be even impossible to be obtained and, anyhow, requires always the transport and positioning thereof, which is clearly complicated, requires adequate appliances as well as the necessary personnel which perform all the operations with a particular care.

Moreover, the use of the described apparatus requires always the presence of at least a qualified person acting on the single controls as well as suitably also of another one as observer of the operation in course of being performed which may communicate between them.

Furthermore, other personnel will be required whenever the winch must be displaced.

From what it has been exposed, it clearly results that the entire unit is composed of two distinct groups, of which the group winch-compressor has considerably difficulties for its arrangement, which as already stated isn't always possible to be done.

The scope of the present invention is that to obviate the various above described inconveniences, by providing a fairly simple apparatus, which is practically self-moving being able to shift it on the surface to be cleaned with own means which keep it self-adhering to said surface, by providing at the same time for its displacement thereon.

All this is obtained by means of the apparatus referred to which comprises a cleaning unit of per se known kind and a seizing unit adapted to permit to fit and move it on the surface to be cleaned, said apparatus being characterized in that it is self-seizing on the associated smooth application surface, being basically provided with a suitable seizing unit formed by at least a seizing track formed by an adequate band extended transversally for about the entire width of said apparatus or preferably by at least a first pair of tracks for seizing to said smooth surface, disposed parallel to each other preferably near the sides of the same apparatus, said track or said pair of seizing tracks being supported by a suitable structure and operated by an adequate moving device driven by an adequate per se known motor such as a pneumatic motor, an internal combustion engine or preferably a motor of electric kind, wherein the supply to said motor may be obtained by means of a suitable supply conduit or cable connecting the apparatus to the associated source of external energy, said source of energy may also able to be constituted, particularly in the case in which an electric motor is employed, by a suitable battery of electric storage elements which may be adequately recharged, contained in the same apparatus, said seizing track or said seizing tracks being each provided with a plurality of cup elements automatically operated under depression on the portion along which they are positioned on the smooth adherence surface such as a wall made of glass or of a similar smooth material, and being automatically operated to be detached therefrom at the end of such portion, the entire apparatus being thus translatable by adherence along the façade to be cleaned, the group of cups positioned on the smooth adherence surface being preferably provided with further means adapted to operate them to be seized to and/or detached therefrom, in order to make easier the fitting and detaching of the apparatus at the beginning and at the end of the cleaning operation, the apparatus also comprising in its internal structure a suitable cleaning unit comprising adequate means cooperating to each other, such as rotating brushes, nozzles for spraying a suitable detergent liquid contained in a suitable reservoir or arriving through a pipe from a separated and adequately disposed reservoir, devices for sucking the dust detached by an associated brush as well as suction and/or blowing devices for removing the detergent liquid in case remained on said surface, such means being all made, arranged and operated with per se known manners, safety means adapted to secure the apparatus against eventual falls thereof due to unforeseeable casual detachings thereof from the surface to which it is fitted, means for detecting the correct operation of the single cups interconnected to associated means for signalling and/or stopping the entire unit and eventual guiding means, adapted to ensure a correct rectilinear movement thereof as well as per se known control and/or remote control means being also provided, finally, the apparatus may be preferably provided with at least a further second pair of seizing tracks fully similar to those of said first pair of tracks, which however is arranged orthogonally to the previous one so as to permit the displacements of the same apparatus which are orthogonal to each other, means being provided adapted to put in action and to operate a first or a second pair of tracks, so that a pair of tracks is deactuated only after the deactuation of the other one, in order to ensure a continuous adherence of the apparatus on the associated application surface.

In order to understand better the features and advantages attainable with the apparatus referred to, the same will be hereinafter described in detail, in a possible preferred embodiment thereof, by way of a not limitative example only and with reference to the accompanying drawings, wherein:

- fig. 1 shows a perspective view and in a schematically way the apparatus object of the present invention, in a possible embodiment thereof;
- fig. 2 shows a schematic longitudinal section of the arrangement and shaping of the various parts of the same apparatus;
- fig. 3 shows an enlarged cutaway view, taken along an orthogonal plane passing axially as well as longitudinally to the one of the seizing tracks of the same apparatus, of a possible embodiment of a cup fitted to said seizing track at a position in which it rests simply on the seizing surface thereof and just prior the same seizing has begun;
- fig. 4 shows a cutaway view like that of fig. 3 of the same cup, at a position in which it is, on the contrary, operated to adhere thereto and thus is seized to the adherence surface;
- fig. 5 shows, as in the previous one, a cup which still being operated to be seized, isn't connected thereto, owing to possible infiltrations caused by irregularities or slits on the surface on which it rests;
- fig. 6 is a partially cutaway view taken along the line I-I of fig. 4;
- fig. 7 shows a perspective view of an enlarged item of fig. 1;
- fig. 8 illustrates a partially broken schematic perspective view of a possible shape of a control system adapted to actuate and deactuate the seizing of the cups of the apparatus referred to;
- fig, 9 and 10, finally, schematically illustrate a transversally cutaway view of the control device of fig. 10, respectively at the deactuation position and the actuation position of the cups of the apparatus referred to.

In such figures, the items in common are marked with the same reference numerals.

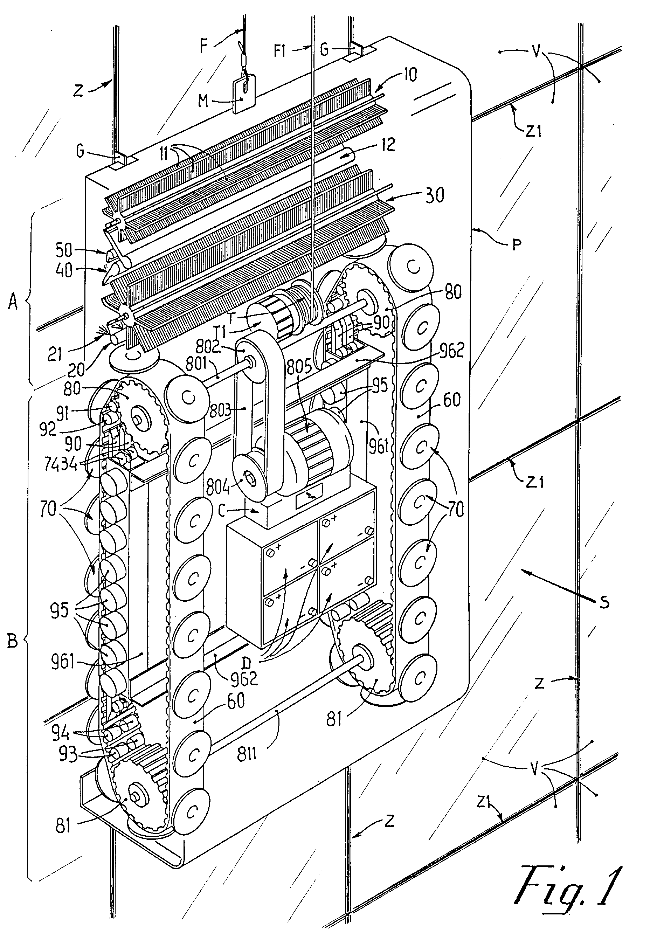

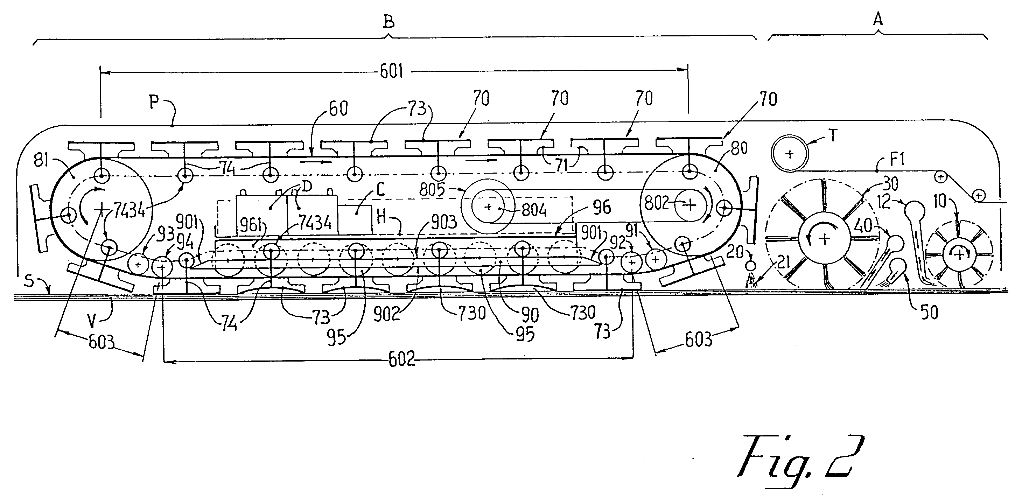

Referring to the fig. 1 and particularly to the fig. 2, it is noted that the apparatus which is described hereinafter comprises a cleaning station A and a seizing unit B.

The cleaning unit A comprises a first rotating brush 10 driven in rotation in the direction indicated by the arrow provided thereabove, which causes a first dry removal of the dirt from the flat surface S of the slab V made of glass (or similar material).

The dirt (or other substance) removed by the rubbing action of the bristles 11 (or other similar elements) of said first rotating brush 10 is then sucked by a first sucking manifold 12, which is suitably arranged in the more rational manner parallelly to said first rotating brush 10. Successivaly and always parallelly to the preceding first rotating brush 10, is arranged a second rotating brush 30 which, for the reasons set forth below, is driven in rotation in a direction opposite to the previous one (10), as indicated also in this case by the arrow provided thereabove.

A sprayer tube 20 provided with adequate nozzles in arranged just after rotating brush 30 and parallelly thereto, which tube generates a correspondent plurality of jets 21, which are suitably oriented on the surface S to be cleaned, when it is supplied with a suitable cleaning liquid contained within a proper reservoir which, for simplicity, isn't illustrated.

Upstream said second rotating brush 30, namely just after said sucking manifold 12, there may be always arranged parallelly to the previous rotating brush 10 and adequately positioned, a second sucking manifold 40 made and shaped in a suitable and per se known manner, adapted to suck the liquid sprayed on the surface S by the sprayer tube 20 and in case remained on the flat surface S after the action of said second rotating brush 30, by letting it into a suitable collecting and/or recycling reservoir, and in case also a blowing manifold 50 provided with an adequate opening (or plurality of openings), which when is supplied in an appropriate way with compressed air and in case also suitably heated, which air is generated by devices not illustrated for simplicity, produces a blast lapping said surface S by causing drying thereof.

The entire unit of said cleaning station A, clearly, may vary in its structure in per se known and adequate manners, moreover it may be disposed at an end thereof only, as for instance in the illustrated case, solely at the upper end of the apparatus or at both the ends thereof.

Furthermore, the part providing the dry suction only (rotating brush 10 and associated sucking manifold 12) and that one providing the cleaning with cleaning liquid (namely the sprayer tube 20 - rotating brush 30 - sucking manifold 40 and/or blowing manifold 50) may be operated separately and independently for the reasons which will be set forth hereinafter.

It is to point out that for simplicity and clearness there aren't illustrated the means for driving said single parts, such as the motor for rotating brushes, the compressor, the exhaust fan, the cleaning liquid supply pump.

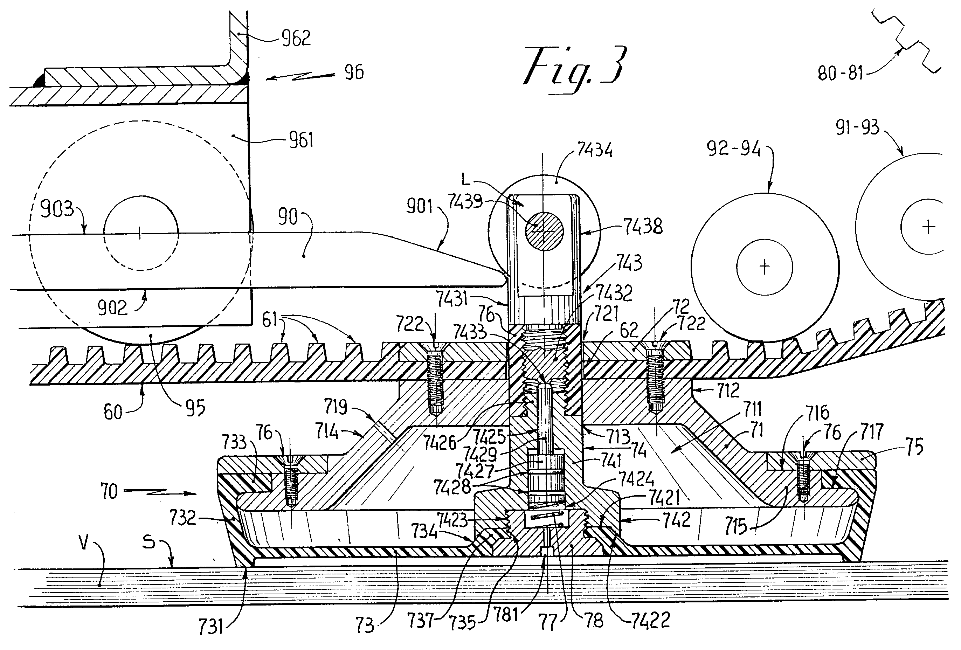

The main innovative part of the machine referred to is constituted by the particular seizing unit which is described hereinafter in detail, with reference besides of the already cited figures 1 and 2, to the subsequent figures 3,4 and 5 too.

Altogether, as particularly pointed out from the fig. 1 and 2, such seizing unit B basically consists of two tracks 60 identical and arranged parallel to each other, near the apparatus sides, wherein both the tracks 60 are provided on the respective outer surfaces with a plurality of cups 70.

In the preferred embodiment to which reference is made, said tracks 60 are constituted practically by a structure which practically reproduces a toothed belt, thus they are provided on the relevant inner side, as particularly pointed out from the fig. 3-4-5-6 and 7, with a plurality of teeth 61 equally spaced to each other and are each applied between two associated pulleys 80 and 81, which are toothed in a correspondent manner on their outer side.

The pairs of toothed pulleys 80 and 81 are interconnected to each other by means of associated rotation shafts 801 and 811 (see fig. 1) and the one thereof, in the illustrated case the shaft 801, is provided with a further toothed pulley 802 which is connected through a toothed belt 803 to another toothed pulley 804, fitted to the shaft of the motor gear 805 which in the considered case comprises as motor an electric motor.

Supply of said motor as well as of all the other members or devices which have been foreseen, may be effected through a suitable cable, adapted to connect the apparatus to a suitable separated supply source positionable on the ground or on the building upper part.

In the space provided among said tracks 60, said motor gear 805 and the rotation shaft 811, into a suitable container C may be disposed a unit composed of different devices such control, survey, safety devices, devices for co-ordinating the various steps and/or functions of reception and/or emission of signals for connection to a separated control station which, for instance, could be connected very simply by means of a cable or by means of electro-magnetic (radio) waves systems or by ultra-sound systems or infra-red rays systems thereto, which are all known and all utilizable technics.

In addition, in the remaining space there may be advantageously placed adequate sets of electric accumulators D for the autonomous supply, in this case, of the motor gear 805 and of all the other control and driving devices for the various members of the apparatus, so that to obtain a fully autonomous apparatus which thus does not require any electric supply cable which connects it to a suitable feeding member.

Still referring to the above mentioned figures and more particularly to the fig. 3,4 and 5, there are noted the particular arrangement of the cups 70 applied to the associated track 60, the associated seizing system and operation thereof.

As particularly pointed out from the fig. 3, it is noted the particular shaping of such cup 70, which is constituted by a rigid body 71 of substantially discoidal form, having a substantially concave inner part 711, which comprises a discoidal upper part 712 provided centrally with a hole 713, adapted to permit, as described hereinafter, the cylindric control stem 74 of said cup 70 to pass therethrough.

It is to point out that, for obvious reasons, said rigid body 71 is provided with at least a hole 719 which put into communication its inner part 711 with the outer ambient.

Correspondent holes 62 having the same diameter of said holes 713 are provided, equally spaced to each other, in the correspondent track 60 and a portion of teeth 61 is removed from its toothed part at the level of such holes, so as to provide for a circular cavity with a diameter equivalent to that one of said discoidal upper part 712, cavity into which is inserted the discoidal flange 72 provided centrally with a hole 721, also having a diemeter identical to the hole 713.

Said discoidal flange 72 is removably fitted to said discoidal upper part 712 of said rigid body 71 by means of suitable screws 722, thus obtaining the connection of said entire rigid body 71 on the track 60.

A substantially frusto-conical portion 714 extends from the lower part of said discoidal upper part 712, which portion terminates with a substantially annular element 715 provided on its upper part with a first inner step 716 and a second outer step 717, whose functions will be described later.

On the lower part of said rigid body 71 is fitted a membrane 73, adequately shaped as described hereinafter, which acts as a cup as described hereinafter too.

Such membrane 73 made of a suitable rubber or equivalent elastomer is substantially constituted by an appropriately thin discoidal wall, having an outer diameter about identical to that one of said annular element 715 and is adequately shaped, in order to permit the same to be fitted to said rigid body 71 as well as to the associated driving device in the way which is described hereinafter.

On the lower circumferential part of said membrane 73 is provided a slightly protruded edge 731, adapted to constitute substantially an annular element which during operation thereof will adhere fully and uniformly on the flat surface S on which the apparatus will be put for performing its functions.

On the contrary, on the upper circumferential part opposite thereto is provided a substantially cylindric or preferably, as illustrated, slightly divergent frusto-conical short portion 732 which terminates at its upper part with an annular edge 733 turned toward the inside.

Moreover, at the centre of said membrane 73 is provided a shaped part 734 surrounding a central hole 735, whose outer side has a diameter rather greater by entering for a sufficient portion therein, so as to form an inner annular lip 737 whose function will be described later.

Inside said rigid body 71 is put a cylindric control stem 74, constituted by a lower mushroom-like shaped part and comprising a cylindric portion 741 having a diameter identical to that one of the hole 713 provided on said discoidal upper part 712 as well as, as stated, also identical to the holes 61 of the track 60 and 721 of the discoidal flange 72 and terminates at the lower part thereof with an enlarged portion 742, at whose lower end a cylindric cavity 7421 generating a circumferential annular projection 7422 is provided.

Furthermore, centrally to said cylindric cavity 7421 is provided another threaded cavity 7423 having a smaller diameter, which continues with a coaxial hole 7424 entering for a suitable portion said cylindric portion 741, which continues with a further coaxial hole 7425.

Finally, the upper end of said cylindric stem 74 terminates with a cylindric portion 7426 having an adequately smaller diameter, which is also threaded at the outer part thereof. Into said coaxial hole 7424 is inserted a piston 7427, slidable therein and provided with suitable sealing rings 7428, which terminates at its upper part with a cylindric rod 7429 slidable within said coaxial 7425, and terminates at its upper part in such a way as to be slightly projected from the upper end of said threaded cylindric portion 7426. Therefore, onto said threaded cylindric portion 7426 is screwed an insulating sleeve 76, made of a suitable electric insulating material and having an outer diameter identical to that one of said cylindric portion 741 of the cylindric stem 74 and provided with a threaded inner through hole, adapted to permit the engagement thereof at its lower part on said threaded cylindric portion 7426 and at its upper part, as described later, on the threaded cylindric portion 7432 of the upper part 743 of the resulting entire cylindric stem 74.

Said upper part 743 comprises a cylindric portion 7431 which terminates at its lower part with a cylindric portion 7432 threaded externally like the threaded cylindric portion 7426, which therefore may engage as described the upper part of said insulating sleeve 76, being screwed thereon, and which is provided at its lower end with a slight projected part 7433 which, as described hereinafter, will contact the upper end of said cylindric rod 7429.

In addition, above said cylindric portion 7431 extends a further portion 7438 machined laterally in such a way as to form two surfaces L parallel to each other and crossed centrally and orthogonally to said surfaces L by a through hole, in which engages a stud 7439 projected symmetrically therefrom, engaged in rotation by two associated driving rolls 7434 whose function will be described later. Then, in each rigid body 71 are inserted said cylindric stems 74 and finally, on each rigid body 71 are fitted the resilient membranes 73 in the following way.

Each membrane 73 is inserted in the rigid body 71 in such a manner that its annular edge 733 be positioned on said second outer step 717, thereafter on said first inner step 716 is fitted the annular flange 75 which is connected to the annular element 715 by means of the screws 76, whose screwing causes said annular edge 733 to be viced and thus fixed on said rigid body 71.

Then, the pistons 7427 together with the associated cylindric rods 7429 are inserted in the cylindric stems 74 and the spring 77 is fitted in the coaxial hole 7424, finally the shaped screw 78 provided centrally with a through hole 781 is screwed in the central hole 735.

The screwng of said shaped screw 78 causes said inner annular lip 737 to be viced in said cylindric cavity 7421, thus obtaining the removable connection of the entire unit of the stem 74, which connection is clearly a tighly sealed connection.

Thereafter, at the level of the holes 62 of said tracks 60 are fitted said rigid bodies 71, which will be fitted thereto by means of said discoidal flanges 72 which are viced on said rigid bodies by screwing the associated fixing screws 722.

As particularly pointed out from the fig. 1 and 2, said tracks 60 which are strained between the associated toothed pulleys 80 and 81, are arranged rectilinearly tangential to said toothed pulleys 80 and 81 with their respective upper portions 601, while the correspondent rectilinear portions opposite thereto, namely the lower portions 602 thereof, which as described later comprise the cups 70 to be seized on the surface S, are shifted fairly outwards and are connected to the respective toothed pulleys 80 and 81 with two inclined portions 603, obtained through the pairs of rolls 91-92 and 93-94 fixed to the structure in an obvious manner, which isn't shown for simplicity, so that in the course of their shifting movement the cups 70 which are removed from or approached to the associated toothed pulley 80-81, are progressively inclined up to be arranged coplanar to the adherence surface S, by avoiding that their outer edges are abutting extemporaneously with strenght on said surface S, which fact could prevent a regular and even operation thereof.

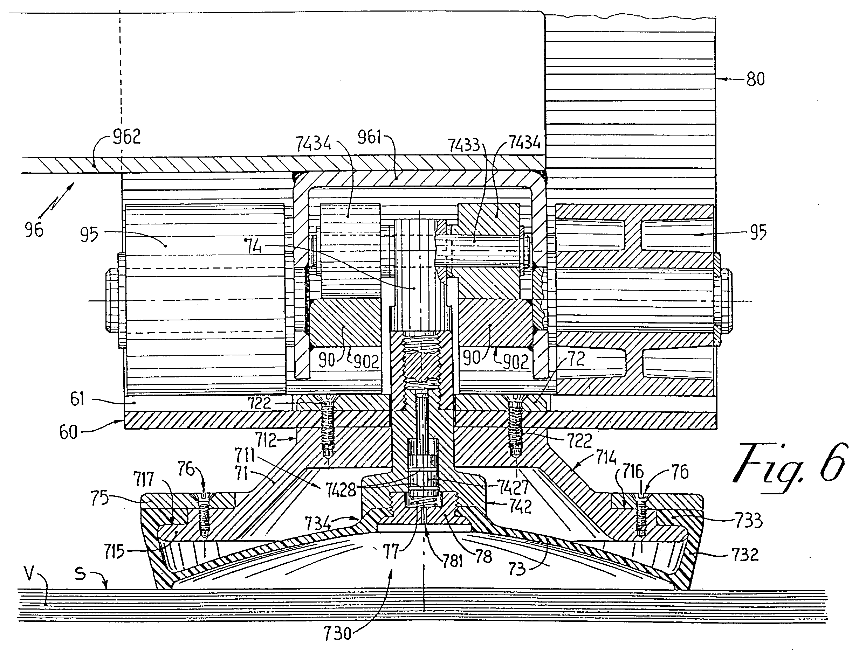

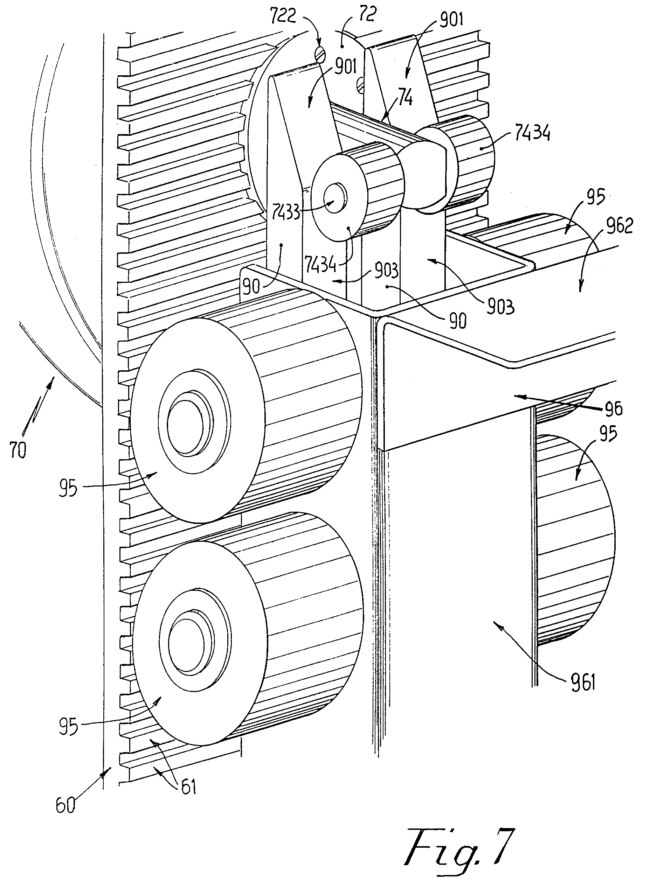

Two longitudinal guide members 90 which are interconnected to each other and supported by an adequate support structure 96 are disposed inside said lower portions 602 of the tracks 60, symmetrically and laterally to the portions of the stems 74 which, as particularly pointed out from the fig. 6 and 7 and as described beforehand, are projected toward the inner part of the same tracks 60.

In the embodiment by way of example to which reference is made, such support structure 96 is basically constituted by a pair of longitudinal parts 961 of a suitable "U" shaped section, disposed on the apparatus sides and extended parallel to each other up to near the longitudinal guide members 90, being also interconnected at their ends on the upper part thereof by further transversal parts 962 constituted by a suitable "L" shaped section.

On the inner surfaces of the two wings parallel to each other of said longitudinal parts 961 are connected said longitudinal guide members 90 which, as particularly pointed out from the fig. 6, are substantially constituted by two respective bars with rectangular cross-section which are disposed parallel and spaced to each other, so as to permit the control stems 74 to pass therethrough, as well as in case adequately spaced from the lower portions 602 of the relevant tracks 60, and which extend up to near said rolls 92-94.

In addition, the two ends of each longitudinal guide member 90 terminate with respective inclined portions 901 which are radiused to the associated upper surfaces 903 thereof, by converging symmetrically to the lower ones 902.

The upper surfaces of said bars forming, as stated, said longitudinal guide members 90 are coplanar to each other and said driving rolls 7434 will slide thereon, as set forth below.

Moreover, relevant plurality of alignment rolls 95 equally spaced to each other are fixed along all the outer surfaces always of said wings of said longitudinal parts 961, onto which rolls the inner side surfaces of said tracks 60 will be laid, which are thus supported thereon along the relevant lower portions 602.

The resulting structure may hold inside it a reservoir H, indicated by a dashed line in fig. 2, whose bottom forms a shelf onto which may be disposed the various moving and driving means of the set of members of the cleaning station A, said container C as well as the eventual batteries of electric accumulators D.

Obviously, the entire structure of the machine here described is contained in a suitable protection casing P (see fig. 2), which is adequately shaped.

As the total description of the machine referred to is ended, one describes hereinafter the operation thereof.

As illustrated by fig. 1, the machine is put on the surface S so that the cups 70 of its seizing side rest onto said surface S.

In the description given by way of example which is done hereinafter, the starting positioning occurs by arranging the apparatus in correspondence of the lower side of the façade to be cleaned.

The protection casing P may be provided with a linking plate M or similar means, adapted to permit it to be connected to a safety cable F, which in this case must be fixed or, rather, linked to a suitable entrainment device such as an appropriate winch or the like provided with an adequate locking device, which will be operated automatically in presence of any unseizing of the machine from the surface S.

Such device will be disposed on the building upper part and at the level of the vertical portion of the wall to be cleaned and will act in such a way as to roll or unroll the safety cable F for following the displacement of the machine only, by intervening in the above specified case only.

Clearly, such solution provides a system similar to that used in the already known machine, which has been criticized previously, and one might have only the advantage to avoid the compressor and to make the winch with reduced sizes as well as lower power, as in this case it isn't requested to shift the entire machine but rather to provide for the rolling and unrolling of the safety cable F to follow the machine in its vertical displacement. More appropriately, a safety cable F1 could be provided which is rolled on and unrolled from a rotating drum T, as illustrated by the fig. 1 and 2, which is driven by a suitable motor gear T1, adequately operated and controlled and, however, it would remain to overcome the inconvenience that the same must be linked and positioned on the façade upper end.

It is to point out that the use of a safety cable is described solely as an eventual possible reason of a further guarantee during utilization thereof, which guarantee isn't necessary in practice, by considering the reliability of the system employed in the apparatus referred to and above all the fact that such a reliability is ensured as described in detail later by suitable and safe though simple devices, which control eventual decreasings or partializations of operation of the entire seizing unit constituted by said cups 70, which permit the movement of the same machine only if it is safely seized on the surface S onto which is disposed.

In order to ensure a perfect guided sliding of the machine, as illustrated in fig. 1 by way of example, two guiding plates G may be disposed at the end of the upper edge as well as in case at the end of the lower edge too, which plates are fixed to adequate sliding supports which permit their shifting along said edge, and which also could be fixed at the desired position correspondent to the slits or, rather, grooves Z which normally are provided between adjacent slabs of a façade of the considered type.

In such a way, said guiding plates G will enter said grooves, thus ensuring a perfect guiding during all the displacement of the machine.

As all the above operations have been performed, the motor gear 805 is started to operate, which controls the rotation of the toothed pulleys 80 through the unit belt (803) - pulleys (802-804), thus setting in movement the associated two tracks 60 and in rotation the pulleys 81 too, in the direction indicated by the arrows, see fig. 2.

As clearly pointed out from the fig. 2, the cups 70 projected externally from the associated track 60 on the upper portion 601 thereof and the cups 70 projected radially from the toothed pulleys 80-81 aren't operating and at the beginning there aren't operating at least partially the pulleys of the lower portion 602 thereof too. As soon as the movement has been started, the two cups 70 which being entrained by the associated track 60 leave the toothed pulley 80, after the short inclined portion 603 are so disposed that their seizing part constituted by the resilient membrane 73 be arranged parallel and adherent to the surface S and in such position the driving rolls 7434 projected laterally from the upper portion 743 of the cylindric control stem 74 are positioned as clearly illustrated by fig. 3 and the respective driving rolls 7434 bear against the correspondent inclined portions 901 of the associated longitudinal guide members 90, at the lower ends thereof.

By pursuing the translation movement, said driving rolls 7434 go up said inclined portions 901 until to arrive on the upper surfaces 903 of said longitudinal guide members 90.

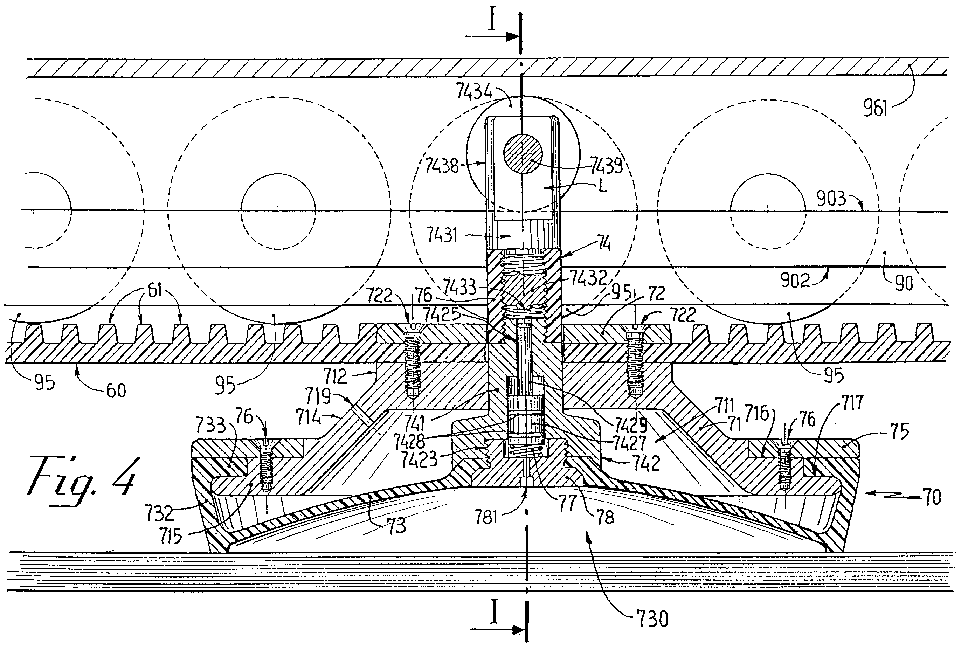

In such second portion, as clearly pointed out from the fig. 4, as well as schematically from the fig. 2, the cylindric control stem 74 due to the combined action of its driving rolls 7434 and of the longitudinal guide members 90 pulls internally the central part of said resilient membrane 73, which will be disposed convergently toward the inside by forming a cavity 730 which is under depression, by means of the action of the edge 731 thereof which is adhering being tightly sealed on the surface S of the slab V, (practically iS generated the vacumn), thus by ensuring the correspondent cup 70 to be seized onto said surface S.

The seizing thereof lasts for the entire portion in which said driving rolls 7434 are sliding on the upper surfaces 903 of the relevant longitudinal guide members 90 up to, when the cup 70 arrives at the opposite end of said longitudinal guide members 90, the driving rolls 7434 thereof are going down along the relevant inclined portions 901 and consequently both the control stem 74 and the resilient membrane 73 return at the starting position thereof illustrated by the fig. 3.

Consequently, the depression keeping the cup 70 seized on the surface S is stopped, so that the cup 70 may be detached therefrom.

Thus, being not more adhering on said surface S the cup 70 progressively continues its translatory movement, by sliding successively along the subsequent inclined portion 603 and, thereafter, by rotating around the toothed pulley 81 (see fig. 1 and 2) and then along the upper portion 601, up to rotate again around the toothed pulley 80, thus by repeating the cycle.

Clearly, the portion along which the cups 70 are operated to be seized thereon is defined by the lenght of the upper surfaces 903 of said longitudinal guide members 90, and is such as to include a sufficient amount thereof (at least five or more).

Moreover, these cups 70 will be adequately dimensioned, so that the total seizing power which has been developed be considerably and adequately greater than the apparatus weight, so as to obtain a safe seizing thereof on the surface S of the façade.

In fact, it is required to take into account a minimum quantity of cups 70 which must be active, since for various reasons at least one or more cups 70 may be uneffective, for instance as illustrated by the fig. 4, when a cup 70 is positioned either on a vertical slit Z or on a horizontal slit Z1 provided between two adjacent slabs V and forming an effective groove, or due to the presence of projections or other elements which may cause the air to be infiltrated in the cavity 730.

In such a case, no depression is generated in the cavity 730, so that the associated cup 70 doesn't provide any seizing.

Such a particular situation must be surveyed and signalled to suitable control and safety members, which are positionable together with other ones into said container C.

In the embodiment to which reference is made, the signalling that the cup 70 is active or inactive is obtained in a very simply way by the action of the piston 7427 (see figures 3,4 and 5), as described hereinafter.

The lower part of the cylindric control stem 74 containing said piston 7427, clearly, is electrically contacted with the rigid body 71 and the relevant discoidal flange 72 thereof, which elements are all made obviously by a suitable metal.

An adequate contact element like an adequately shaped resilient metallic lamina, which projects i.e. from said discoidal flange 72 and engages a suitable longitudinal metallic element placed i.e. along a longitudinal guide member 90, forms an effective sliding contact which may be connected by an appropriate electric wire to the associated device signalling the operation or not operation of the relevant cup 70.

The items of such sliding contact,clearly, may vary widely in a per se known manner, so that they aren't illustrated for simplicity.

The upper part 743 too of said cylindric control stem 74 with the stud 7439 and the associated driving rolls 7434 are all made of metal, so that by putting said driving rolls 7434 onto the longitudinal guide members 90, also metallic and connected to said support structure 96, said upper part practically is connected electrically to the earth, said earth being formed by said support structure 96 which, therefore, forms also the earth of said device for signalling or not signalling the operation of the cup 70.

As described, such two parts are electrically insulated by the insulating sleeve 76 therebetween.

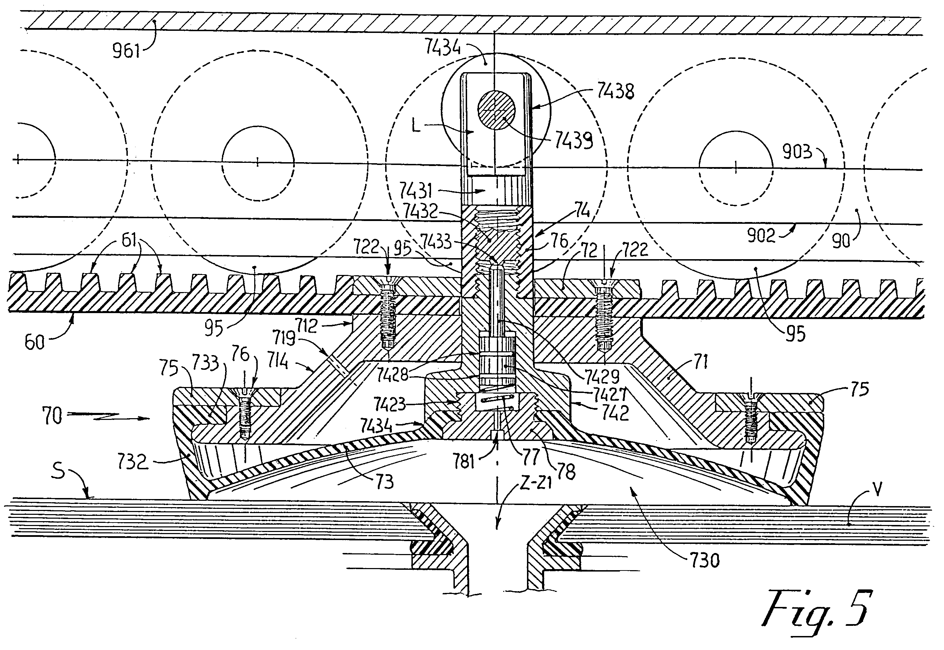

It follows that when the cup 70 is disposed in any inactive position thereof, which position is clearly illustrated by the fig. 3, or any not operating position for the above mentioned reasons, as illustrated by the fig. 5, the piston 7427 is pushed inwardly by the action of the spring 77, so that the upper end of the cylindric rod 7429 engages by bearing the projected part 7433 of the upper part 743, so as the contact provided between such two parts is closed and, thence, the relevant surveying circuit thereof is closed too.

On the contrary, when the cup 70 is operated to be seized and operates as pointed out from the fig. 4, the depression developed in the cavity 730 penetrates through the through hole 781 of the shaped screw 78 in the cavity where the spring 77 is disposed, so that on the piston 7427 is developed a force which tends to slide it towards the shaped screw 78 opposite thereto, thus by crushing said spring 77 and consequently by self-entraining the relevant cylindric rod 7429 too.

It follows that the end of said cylindric rod 7429 is detached from the projected part 7433 of the upper part 743, thus by cutting off the contact and therefore the associated surveying circuit as well.

In the case in which the cup 70, still being operated to be seized, has no depression in said cavity 730 because of air penetrations through the slit Z or Z1 provided between two adjacent slabs V (or because of any other reason), as illustrated clearly by the fig. 5, being the piston 7427 not more attracted by the depression which, as stated, doesn't develop, stays in the position previously illustrated by the fig. 3, so that the contact between the end of the relevant cylindric rod 7429 and said projected part 7433 of the upper part 743 remains closed and, consequently, also the associated surveying circuit is energized.

The surveying circuit which, as stated, may be arranged within said container C, is so designed as to control the machine in the stopped position thereof by providing at the same time an adequate acoustic and/or bright signal, adapted to advise that a critical situation has been produced.

Such a critical situation could be determined by the signalling of failure of sezing of a pre-established amount of cups 70, so that the remaining cups 70 being seized are enough to prevent the apparatus from being detached from the relevant façade to which it has been applied.

In the embodiment to which reference is made, the arrangement of the rotating brushes 10 and 30 as well as of the other elements is provided in such a manner that the machine provides solely for the dry-cleaning of the façade to which it is applied, when it is advanced in the way illustrated by the arrows and for the washing cleaning when it is advanced in the direction opposite thereto.

More clearly, for instance, the machine could be fitted at the level of the base of the façade and at a first operation step it could be operated to rise vertically towards the upper end thereof, by providing solely for the dry-cleaning of a correspondent vertical band thereof.

Afterwards, at a second operation step it is operated to go down also vertically, by providing for the washing cleaning and drying of the same band of façade.

At the end, it is so obtained that when the apparatus finds it at its starting position again, a complete and optimum cleaning of the correspondent band of façade has been attained.

Clearly, it is opportune that at the first operation step the sole cleaning unit constituted by the rotating brush 10 and the associated sucking manifold 12 be operated to be driven, while the wash-cleaning and drying unit constituted by said second rotating brush 30, the sprayer tube 20, the second sucking manifold 40 and/or said blowing manifold 50 be deactuated.

In addition, at such step it is opportune that the sole first rotating brush 10 and the associated sucking manifold be operated to be approached to the surface S, while it is opportune that the second rotating brush 10 and the associated sucking manifold 40 be adequately operated to be removed from said surface S, and, obviously, such elements will be operated in an opposite direction at said second step.

The approaching and removal of the above mentioned members is controlled be means of per se known devices and means which, for simplicity, aren't illustrated and described.

In this way, as the cleaning of a vertical band of the façade has been completed, one provides for detaching the machine therefrom and for positioning it again in correspondence of another vertical band of the façade, adjacent thereto, in order to effect the relevant cleaning thereof and so on up to obtain the cleaning of the entire façade.

In the embodiment hitherto described of the apparatus referred to, the starting seizing thereof on the façade to be cleaned could be uncertain and more or less difficult and also the subsequent unseizing thereof at the end of each cleaning path could be difficult.

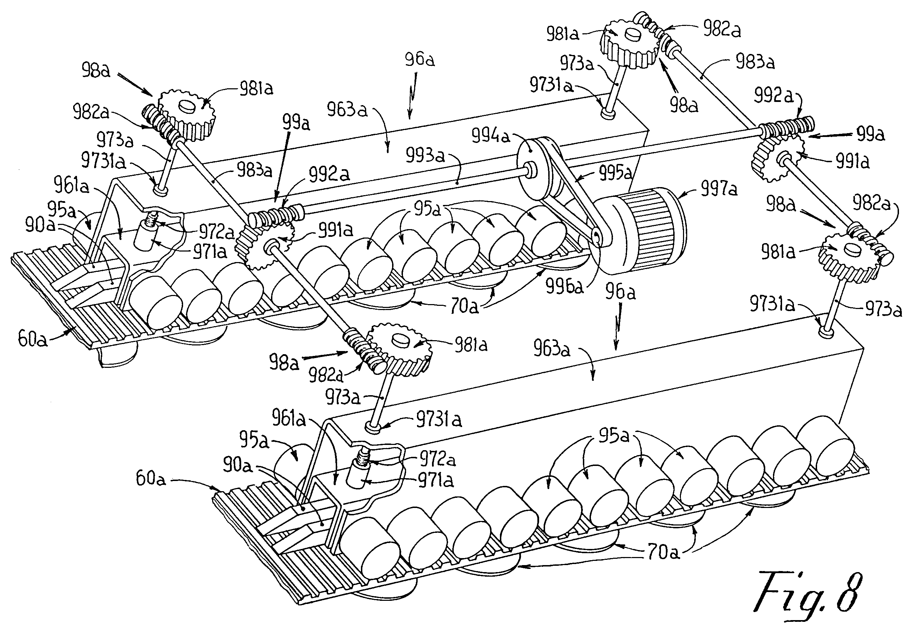

In order to obviate to all this, it is possible to control the seizing and unseizing by means of a particular arrangement which is described hereinafter synthetically, with reference in particular to the fig. 8,9 and 10 wherein some of the items in common to those of the previous figures are marked for clearness by adding the letter "a" to the reference numeral thereof.

According to such an arrangement, the support structure of said longitudinal guide members 90 a is always constituted by a pair of parts of "U" shaped sections 961a, disposed in the manner described as above, which however are inserted internally to a further pair of parts of "U" shaped section 963a which are carrying the alignment rolls 95a, which, then, are appropriately interconnected transversally to each other by suitable further parts of transversal sections 964a, which for clearness aren't indicated in the fig. 8, while they are indicated in the fig, 9 and 10 by a thin line, thus forming the inner fixed structure 96a of the apparatus.

It follows that the support structure of the longitudinal guide members 90a is independent from the fixed structure 96a of the apparatus.

Moreover, said parts of "U" shaped section 961a inserted in the correspondent parts of "U" shaped sections 963a are operable to be approached to and removed from these latter by means of a particular kinematic system which is described hereinafter, so as to obtain the actuation and deactuation of the cups 70a being applied on the tracks 60a and disposed on the smooth seizing surface S.

According to such kinematic system, the sleeves 971 a provided with a coaxial threaded hole engaged by the threaded end 972a of a control shaft 973a are fixed near the ends of said parts of "U" shaped sections 961a.

Such control shaft 973a passes through a correspondent hole bored in said parts of "U" shaped section 963a and may rotate therein, however being prevented from translating longitudinally therein by the flanges 9731a projected radially therefrom and at its other end is connected a toothed-wheel 981a, engaged then by a worm 982a, which form a correspondent first reduction-unit 98a.

The two pairs of worms 982a of the four correspondent reduction-units 98a provided at the two correspondent ends of said parts of "U" shaped section 963a are interconnected to each other by an associated transversal shaft 983a, to which another toothed wheel 991a engaged by an associated worm 992a is fixed, which form correspondent reduction-units toothed wheel-worm 99a.

In turn, the worms 992a of such reduction-units toothed wheel-worm 99a (see fig. 8) are fixed at the ends of a longitudinal shaft 993a, to which is fixed a pulley (preferably a toothed pulley) 994a interconnected by a belt (preferably a toothed belt) 995a to the pulley 996 (preferably a toothed pulley) fitted to the driving shaft of a suitable electric motor 997a (or, preferably, a geared motor).

Clearly, by driving said electric motor 997a (or geared motor) in opposite directions, the threaded ends 972a of said control shafts 973a are consequently screwed or unscrewed with respect to the correspondent sleeves 971a and, therefore, said parts of "U" shaped sections 961a and 963a are accordingly reciprocally approached and removed.

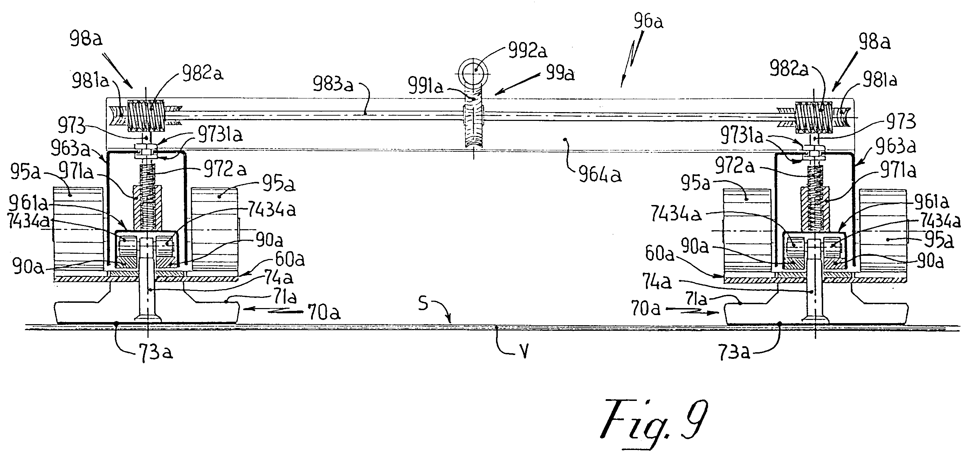

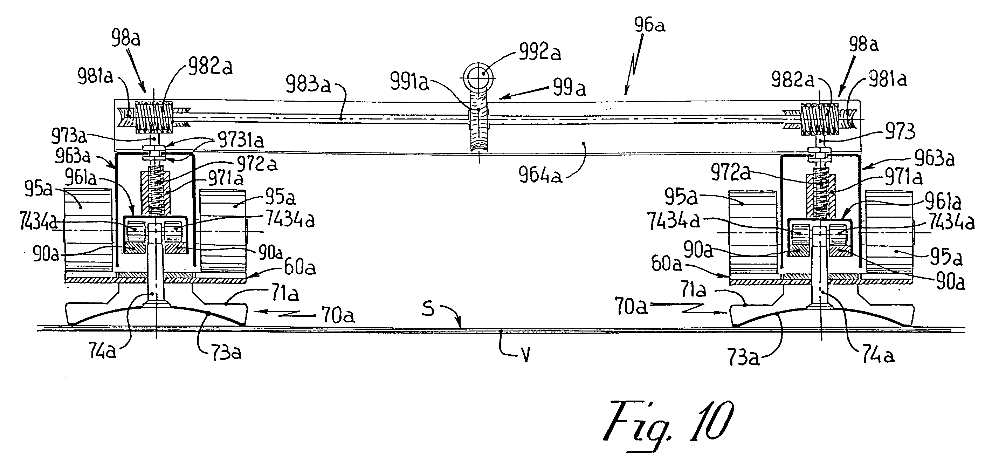

It follows that the longitudinal guide members 90a connected to said parts of "U" shaped section 961a are shifted coplanarily to each other being respectively approached to or removed from the seizing surface S, so that, as clearly pointed out particularly from the fig. 9 and 10, the driving rolls 7434 a disposed at the ends of the cylindric stems 74a of the correspondent cups 70a and which engage said longitudinal guide members 90, control through said respective cylindric stems 74a the correspondent resilient membranes 73a in such a manner as to displace them respectively outwardly as illustrated by the fig. 9, in which position no seizing to the smooth surface S takes place, or inwardly as illustrated by the fig. 10, in which position, on the contrary, the seizing to said smooth surface S occurs.

It is to point out that, obviously, adequate control means such as suitable stop elements are provided, which are adapted to stop the movement of the structure of said guide members 90a at the extreme operation end positions thereof. The described kinematc system obviates the above mentioned restrictions and drawbacks, in fact the apparatus may be simply laid on the smooth surface S at the beginning of the operation thereof and said parts of "U" shaped sections 961a and 963a are operated to be approached to each other, so that said longitudinal guide members 90a raise the cylindric stems 74a by drawing the resilient membranes 73a inwardly the rigid bodies 71a affected by the device, so as to produce the seizing of the correspondent cups 70a on said smooth surface S.

At the end of operation, on the contrary, it is enough to control that said parts of "U" shaped sections 961a and 963a be removed to each other, in order to obtain the unseizing of the correspondent cups 70a, so that it is easy and simple to detach the apparatus for arranging it in a new operating position.

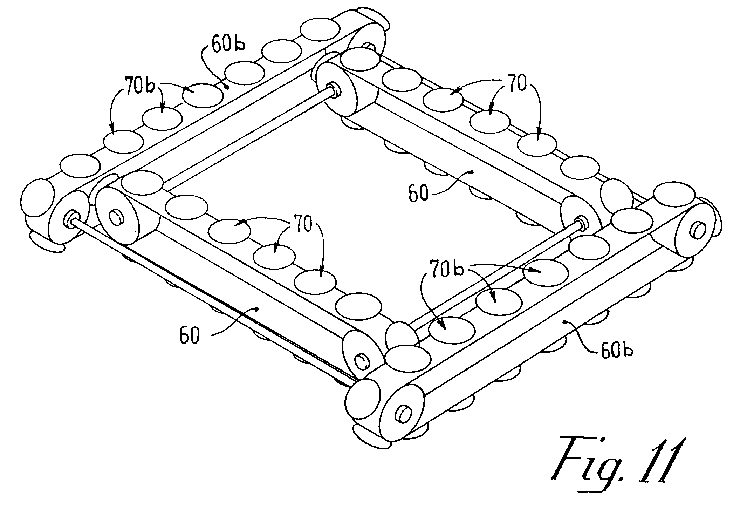

At this point, it is to point out that the apparatus referred to may be provided advantageously, as schematically illustrated by the fig. 11, instead of a sole pair of tracks 60 as illustrated by the fig. 1, with another pair of tracks 60b fully identical to those described and also provided, therefore, with associated cups 70b and means for moving thereof and operating the relevant cups 70b, said two pairs of tracks 60 and 60b being also disposed orthogonal to each other, so that the tracks 60b of said second pair are practically disposed at the ends of the tracks 60 of the first pair.

For simplicity and clearness, in the fig. 11 are illustrated the two pairs of tracks 60 and 60b only, which are disposed between the associated pulleys 80-81 and 80b-81b without the other associated operating members and devices etc. whose shape and arrangement is obvious and anyhow equal to that one previously described for the sole pair of tracks 60.

According to such further possible arrangement, each pair of tracks 60 and 60b has to be provided with a suitable operating kinematic system adapted to let them approached to and/or removed from the smooth surface S onto which the apparatus is disposed, so that the relevant cups (70 and 70b) arranged on the portion adjacent to such smooth surface S are positioned being laid thereon or fairly removed therefrom.

The two associated operating kinematic systems could be similar to the kinematic system described in advance as far as the seizing and unseizing control of the cups 70a of the sole pair of tracks 60a is concerned and, clearly, both such kinematic systems may be obtained in other various ways, for instance with hydraulic and/or pneumatic controls or with other ones, which are all obtainable with per se known manners and technics so that they will not be described for simplicity.

Such shape permits to obtain the remarkable advantage that the resulting apparatus may be operated to be translated not only in a sole longitudinal direction, but also in two longitudinal directions orthogonal to each other, without the need to detach and re-attach thereof at the end of each operative run.

In fact, the thus designed apparatus could be applied at the beginning at any position of the façade and thereafter be operated anyway without detaching it therefrom, up to the complete cleaning of the same façade has been attained. In detail, the operative procedure occurs in the following way.

Firstly, the apparatus is laid on an adequate zone of the façade, preferably at the lower end thereof, then, in the case in which one desires to perform the cleaning operation with translations along vertical bands thereof, it is firstly disposed approached thereto solely the associated first pair of tracks 60 so as the relevant cups 70 are adjacent to the smooth surface S of said façade, being resting thereon, and afterwards these cups are operated on the seizing condition thereof as described.

Thereafter, a first vertical translation of the apparatus along the façade is effected, wherein the apparatus firstly raises up to the upper end thereof by performing the dry-cleaning thereof, and then it comes down by performing the cleaning thereof with washing and drying.

When the apparatus at the end of this first translation finds it again practically at the starting position thereof, also the second pair of tracks 60b is operated to be approached to the surface S, so that the relevant cups 70b thereof which are adjacent to said smooth surface S are also resting thereon, and thereafter these cups are operated on the seizing condition thereof always according to the above described manner and system.

Thus, the apparatus is seized through the cups 70 and 70b of both the pairs of tracks 60 and 60b and at this point it is possible to operate firstly the cups 70 of the tracks 60 to be unseized and, then, the unit is operated to be removed from the smooth surface S, the apparatus being however always seized thereon by the action of the cups 70b of the tracks 60b.

Also said guiding plates G may be controlled by means of suitable devices made in various manners, which devices aren't illustrated for simplicity, so that these plates may leave the grooves Z thus making the apparatus free to translate horizontally.

It is to point out that also additional guiding plates (not shown) fully similar to the previous ones, however which are disposed on the apparatus sides may be foreseen, which plates can be operated to enter correspondent and equivalent horizontal grooves Z1 (see fig. 1), also provided normally on the façade.

Moreover, the right positioning of said guiding plates G with respect to either said vertical grooves Z or horizontal grooves Z1 may be controlled by adequate devices, adapted to slide them along the relevant sides thereof, being controlled by further devices for surveying either said vertical grooves Z or horizontal grooves Z1 such as adequate sensors, which devices may be made all with per se known manners and technics, and are neither illustrated nor described for simplicity.

Thus, the tracks 60a can be operated to translate, so that the apparatus is shifted horizontally up to be positioned at the level of a façade band adjacent thereto and when is arrived at this position, the pair of tracks 60 is operated again to be approached to the smooth surface S, then, the associated cups 70 are operated on their seizing condition and afterwards the cups 70b of the tracks 60b are operated to be unseized and said tracks 60b are operated to be removed therefrom and, thence, the apparatus may start again another vertical translation along said adjacent façade band by cleaning thereof as described.

Thereafter, the operation may continue without interruptions up to the cleaning of the entire façade is finished.

It is to point out that all the various elements of the described apparatus are operated, controlled and co-ordinated to each other by a suitable program control unit, preferably an electronic computer, which may be disposed into said container C and such a program control can be so designed as to permit to perform cleaning of an entire façade fully automatically, without the intervention of any operator.

The best, a sole person may be foreseen, whose function is devoted to check the entire operation only, which person could intervene in the case in which critical situations happen, which may be adequately signalled as already stated.

Obviously, the described apparatus may operate not only on thoroughly smooth surfaces, but also on surfaces permitting anyway the seizing of its cups thereon.

Furthermore, it may be seized and may perform its functions not only on vertical façades but also in case on anyway inclined and even horizontal disposed surfaces such as ceilings and the like, since the power of adherence to the seizing surface provided by the sets of its cups being seized 70 or 70a and/or 70b could be considerably greater than the weight of the same apparatus.

From what described, appear evident the considerable advantages attainable with the apparatus referred to, which in practice is an effective "robot" which at the limit may effect the complete cleaning of an entire façade or of any other surface like floor, ceiling, wall etc. on a fully automatic way.

Obviously, the various elements of the here described apparatus could be made in different manners and shapes, for instance instead of a sole pair of side tracks 60 could be provided either three or more tracks or also a sole track, extended transversally to the entire apparatus and in such a case provided with many rows of cups disposed parallel to each other.

Moreover, the cups may be made instead of circular form also of elliptical or rectangular form provided with adequately rounded corners and also the depression surveying system, when said cups are operated on their seizing condition, instead of the piston 7427 and associated electric contacts may be constituted either by a metallic storage unit or by a resilient membrane, which obviously are always provided with associated electric contacts or by an adequate per se known electronic detector as well.

Also the depression control system for the cups 70 may be made in various different manners, for instance the cups 70 could be connected by adequate pipes to a device generating a suitable depression, like a vacuum pump or the like, and they may be operated under depression on the desired portions by means of per se known intercepting means.

Finally, also the kinematic control systems providing for approaching to and removing from the surface S the unit of the longitudinal guide members 90, and obviously also those providing for approaching thereto and removing therefrom the eventual two units of pairs of tracks 60 and 60b could be made in different manners, for instance with oil-pneumatic systems and the like, all of per se known type too.

It is well understood that these and other different variants may be brought to the apparatus which is the object of the present invention, however without departing from the sphere of what described and hereinafter claimed with reference to the accompanying drawings, and therefore from the protection field of the present industrial invention.

## Claims

1. Apparatus for cleaning continuous smooth surfaces, comprising a cleaning unit (A) of per se known kind and a seizing unit (B) adapted to permit the connection and translation thereof on the surface (S) to be cleaned, said apparatus being characterized in that it is self-seized on the relevant application smooth surface (S), being basically provided with a suitable seizing unit (B) constituted by at least a seizing track formed by an adequate band extended transversally for about the entire width of said apparatus or, preferably, by at least a first pair of tracks (60) for seizing on said smooth surface (S), which are arranged parallel to each other preferably near the sides of the same apparatus, said track or said pair of seizing tracks (60) being supported by an adequate structure (96) and operated by a suitable moving device driven by a per se known motor such as a pneumatic motor, an internal combustion engine or preferably an electric motor (805), the supply for said motor being adapted to be obtained by a suitable supply conduit or cable connecting the apparatus to the associated external energy source, wherein the energy source may be constituted, particularly in the case in which an electric motor (805) is employed, by a suitable battery (D) of electric storage elements which may be re-charged and is contained in the same apparatus, said seizing track or said seizing tracks (60) being each provided with a plurality of cup elements automatically operated under depression on the portion (602) along which they are positioned on the adherence smooth surface (S), such as a wall made of glass or of similar smooth material, being automatically operated to be detached therefrom at the end of such portion, thus the entire apparatus being translatable by adhering along the façade to be cleaned, wherein the set of cups (70) positioned on the adherence smooth surface (S) is preferably provided with additional means adapted to operate them to be seized thereto and/or detached therefrom, in order to make easy the connection and detaching of the apparatus at the beginning and at the end of the cleaning operation, the apparatus also comprising in its inner structure a suitable cleaning unit (A) including adequate means co-operating to each other, such as rotating brushes (10-30), nozzles (20) for spraying a suitable detergent liquid contained in a reservoir or arriving through a conduit from a suitably disposed separate reservoir, devices (50) for sucking the dust detached by a relevant brush (10) as well as sucking devices (40) and/or blowing devices (50) for removing the detergent liquid which is remained in case onto said surface (S), wherein such means are all made, disposed and operated in per se known manners; safety means (F-F1-T-T1) adapted to ensure the apparatus against eventual falls thereof due to unforeseeable casual detachings thereof from the surface (S) onto which it is disposed, means for surveying the right operation of the single cups (70), which are interconnected to associated means for signalling and/or stopping the operation of the whole assembly, and eventual guiding means (G) adapted to ensure a correct rectilinear translation thereof as well as control and/or remote contol means of per se known kind being also provided.

2. Apparatus according to claim 1, characterized in that it could be preferably provided with at least a further second pair of seizing tracks (60b) fully similar to those of said first pair of tracks (60), being however arranged orthogonally to the previous one so as to permit to effect displacements of the same apparatus, which are orthogonal to each other, means being provided adapted to actuate and to put in operation either a first or a second pair of tracks (60-60b), so that a pair of tracks be deactuated only after the other one has been actuated, in order to ensure the continuity of adherence of the apparatus on the relevant application surface thereof.

3. Apparatus according to claim 1, characterized in that said pair of seizing tracks (60) is arranged strained between associated pairs of correspondent pulleys (80-81) fitted to relevant rotation shafts (801-811), at least one of which (801) is connected through a suitable driving unit (802-803-804) to a suitable moving means like preferably an electric geared motor (805), said pulleys (80-81) being preferably toothed so that their teeth engage associated teeth (61) provided on the inner surface of said seizing tracks (60), wherein the upper portion thereof (601) is rectilinear and strained tangentially to the relevant toothed pulleys (80-81), while the correspondent lower rectilinear portion thereof (602) correspondent to the portion whose cups will be laid onto said surface (S) to be cleaned, is spaced parallelly toward the outside thereof and is supported by a plurality of associated alignment rolls (95), by defining at its ends two inclined portions (603) connected to the relevant toothed pulleys (80-81) in a progressive manner, being supported by associated pairs of rolls (91-92 and 93-94) so as to align progressively said cups (70), at a removed and/or approached condition thereof with respect to said pulleys (80-81), to said lower rectilinear portion (602) and therefore to the application surface (S).

4. Apparatus according to claims 1 and 2, characterized in that a plurality of cup elements (70) adequately operated to be seized only along said lower rectilinear portion (602) is disposed on the outer side of said seizing tracks (60).

5. Apparatus according to the previous claims, characterized in that said cup elements (70) are constituted by a respective substantially circular and adequately concave rigid body (71), whose upper part (712) is fitted to the associated seizing track (60) by means of a relevant discoidal flange (72) disposed inside the same seizing track (60) and which vices the assembly thereon by means of suitable fixing screws (722), wherein at the outer end of said rigid bodies (71) is also applied a resilient membrane (73), which is fitted perimetrically thereto with an annular edge (733) thereof, which is viced by an associated annular flange (75) through adequate fixing screws (76) onto the annular element (715) provided on said outer end of said rigid body (71), said resilient membrane (73) being also provided perimetrically with an edge (731) slightly projected toward the outside, adapted to be sealed tightly on the seizing surface (S) and centrally with a shaped part (734), surrounding an associated central hole (735) engaged by a shaped screw (78) adapted to fit it to a cylindric stem (74), slidably passing centrally through the part connecting said rigid body (71) to the associated track (60).

6. Apparatus according to the previous claims, characterized in that along said lower rectilinear portions (602) of the pair of tracks (60) are disposed two parts of "U" shaped section (961), internally to and adequately spaced from the relevant tracks (60), whose two wings are turned toward said tracks (60), wherein on the inner surfaces of said two wings are fixed two longitudinal guide members (90), near the free ends thereof, and two pluralities of said alignment rolls (95), adequately equally spaced to each other, are fixed to the correspondent outer surfaces thereof, said longitudinal guide members (90) being constituted by respective pairs of bars with rectangular cross-section disposed parallel and suitably spaced to each other, so as to permit the connection of said cylindric stem (74) thereto, and whose upper surfaces (903) are also coplanar to each other, wherein the ends of each longitudinal guide member (90) also terminate with respective inclined portions (901) symmetrically convergent toward the outside; finally, the pair of said parts of "U" shaped section (961) being interconnected preferably by further transversal parts (962) of suitable sections, by providing a suitable support structure (96) which is a part of the entire structure of the apparatus referred to, which is adequately contained in a protection casing (P).

7. Apparatus according to the previous claims, characterized in that said cylindric stems (74) are provided at their upper end, namely that turned inwardly the apparatus, with a pair of driving rolls (7434) disposed symmetrically and laterally to said stem and supported by a respective stud (7439), transversally fixed to said upper end and projected symmetrically from the sides (L) thereof, said pair of rolls being slidably engaged by rotating by the correspondent upper surface (903) of said longitudinal guide members (90), going up and down the same during the tranlation of the associated tracks (60), while sliding onto said inclined portions (901), said cylindric stem (74) thus being operating said resilient membrane (73) from a first position, in which it is arranged planar and therefore is unactive, to a second position in which said resilient membrane (73) is drawn inwardly by providing a cavity (730) which, if the edges (731) thereof are adhering to the surface (S), is under depression by generating consequently the seizing thereof to said surface (S).

8. Apparatus according to the previous claims, characterized in that said means surveying the right operation of said cups (70) are constituted by a device adapted to detect if said cups (70), when are operated on their seized condition, generate or not generate the desired depression into the resulting cavity (730) thereof, said device being formed by an electric contactor operated by said depression in its switched off or on condition, said electric contactor being preferably constituted by a first fixed contact (7433) and by a second movable contact (7429), which is pushed by suitable resilient means (77) to bear against said first fixed contact (7433) and which is operated to be detached therefrom by suitable means (7427) operated by the depression.

9. Apparatus according to claims 1,5,6 and 7, characterized in that said cylindric stem (74) comprises a lower portion (741) and an upper partion (743) made of metal, which are interconnected by an electric insulating sleeve (76) screwed into engagement on the associated threaded cylindric portions (7426 and 7432), wherein the inner end of said threaded cylindric portion (7432) of said upper portion (743) is provided centrally with a projected part (7433) and said lower portion (741) is provided with a piston (7427) connected at its upper part to an associated cylindric rod (7429), which are slidable in correspondent coaxial holes (7424-7425), said piston (7427) being pushed inwardly by a spring (77) placed between it and said shaped screw (78), so that the upper end of said cylindric rod (7429) bears against said projected part (7433) thereby causing the so resulting electric contact to be switched on, said shaped screw (78) being also provided with a through hole (781) adapted to transmit inside the hole (7424) the depression produced in the cavity (730), when said resilient membrane (73) is operated to be shifted inwardly by said cylindric stem (74), thus providing for a thrust onto said piston (7427) which, by exceeding the action of said spring (77), causes the upper end of the correspondent cylindric rod (7429) to be removed from said projected part (7433), thereby providing for switching off the so resulting electric contact, wherein the two parts of said electric contact are electrically connected to an associated electric or electronic control device of per se known type, adapted to detect any partial seizing fault, by controlling in case the safety stop of the apparatus and by signalling with suitable bright and/or acoustic means of already known type any critical seizing situation of the apparatus.

10. Apparatus according to the previous claims, characterized in that the pair of first parts of "U" shaped section (961a) inside which said longitudinal guide members (90a) are fixed, are independent from the remaining fixed structure (96a), being inserted internally to a further correspondent second pair of parts of "U" shaped section (963a) which are carrying the sole alignment rolls (95a) of the relevant tracks (60a), which are interconnected to each other by further parts of transversal sections (964a) thereby forming said fixed structure (96a), said first pair of said parts of "U" shaped section (961a) being also operable to be approached to and removed from the correspondent parts of "U" shaped section of said second pair of parts of "U" shaped section (963a) by means of a suitable kinematic system.

11. Apparatus according to the previous claims and particularly according to claim 10, characterized in that said kinematic system is constituted preferably by at least four cylindric sleeves (971a), provided with a threaded coaxial hole and disposed near the ends of the parts of section of said first pair of parts of "U" shaped sections (961a), wherein each of said threaded holes of said sleeves (971a) engages the threaded end (972a) of correspondent control shafts (973a) passing through correspondent holes provided on the parts of section of said second pair of parts of "U" shaped section (963a), into which holes they may freely rotate being however prevented from translating longitudinally therein by means of associated flanges (9731a), projected radially therefrom and disposed on the opposite ends of said holes, said control shafts (973a) being finally operated synchronously by suitable driving means to be screwed and/or unscrewed.

12. Apparatus according to the previous claims and particularly to the claim 11, characterized in that said means for driving synchronously said control shafts (973a) are constituted preferably by an electric motor or geared motor (997a) which drives in rotation, in case through a suitable connecting unit constituted by a belt (995a) and associated pulleys (996a-994a), a longitudinal shaft (993a) which drives in rotation, through suitable reduction-units (99a) constituted by respective pairs of toothed-wheels (991a) - worms (992a) disposed at its ends, correspondent transversal shafts (983a) onto which said toothed - wheels (991a) are fixed, wherein said transversal shafts, in turn, are provided at their ends with further reduction-units (98a) also constituted by respective pairs of toothed-wheels (981a) - worm (982a), whose toothed-wheels (981a) are fixed on the correspondent ends of said control shafts (973a), thereby providing for driving in rotation thereof, said electric motor or geared motor (997a) being also able to be operated to rotate in opposite directions, thereby providing for screwing or unscrewing synchronously the threaded ends (972a) of said control shafts (973a) with respect to the associated sleeves

(971a).

*Fig. 1*

Fig.2

*Fig. 3*

EP 0 505 956 A1

Fig. 4

*Fig. 5*

EP 0 505 956 A1

*Fig. 6*

*Fig.7*

Fig. 8

Fig. 9

EP 0 505 956 A1

Fig. 10

EP 0 505 956 A1

*Fig. 11*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | ROBOTICS no. 12, 8 December 1986, PETERBOROUGH, NH pages 27 - 30; 'the skywasher' | 1,2 | A47L1/02 |
| Y | * the whole document * | 1-12 | |
| Y | BE-A-813 370 (SEACLEAN SA) * the whole document * | 1-12 | |
| X | DE-A-2 346 582 (FRAUNHOFER-GESELLSCHAT) * the whole document * | 1 | |
| A | US-A-4 198 724 (S.L. FISHER & AL) * the whole document * | 1 | |
| A | OE-A-2 748 142 (H.J. LAHAYE) * the whole document * | 1 | |
| A | DE-A-1 428 414 (W. HULAND) * the whole document * | 1 | |
| A | US-A-3 218 663 (J. BATTISTA) | | TECHNICAL FIELDS SEARCHED (Int. Cl.5) |
| | ----- | | A47L |

The present search report has been drawn up for all claims

| Place of search | Date of completion of the search | Examiner |
|---|---|---|
| THE HAGUE | 26 JUNE 1992 | M. VANMOL |

EPO FORM 1503 03.82 (P0401)